# FASCICULE DE BREVET EUROPEEN

(11) **EP 0 554 200 B1**
(45) Date de publication et mention de la délivrance du brevet: **11.09.1996**
(21) Numéro de dépôt: 93440006.0
(22) Date de dépôt: 22.01.1993
(51) Int. Cl.: A01D 78/10, B62D 13/04, C03B 19/00, C03B 19/10

(54) **Machine de fenaison comportant un châssis avec des roues porteuses commandées**
Heuwerbungsmaschine mit einem mit gesteuerten Stützrädern versehenen Rahmen
Haymaking machine comprising a frame with controlled support wheels

(30) Priorité: 24.01.1992 FR 9200917
(43) Date de publication de la demande: 04.08.1993
(73) Titulaire: KUHN S.A., F-67700 Saverne (FR)
(72) Inventeur: Gantzer, Christian, F-57820 Dannelbourg (FR)
(74) Mandataire: Andres, Jean-Claude

(56) Documents cités:
- EP-A- 0 316 896
- DE-A- 2 364 416
- DE-U- 9 014 438
- FR-A- 2 662 908
- US-A- 3 698 486
- US-A- 3 820 811
- US-A- 4 244 596

## Description

La présente invention se rapporte à une machine de fenaison comportant un châssis portant un ou plusieurs rotors à axes dirigés vers le haut, lequel châssis se compose d'une partie allongée à laquelle sont reliés lesdits rotors par l'intermédiaire de bras, d'un organe d'accouplement à un tracteur, cet organe étant articulé à l'extrémité avant de la partie allongée au moyen d'un axe sensiblement vertical et de roues porteuses qui sont reliées à l'extrémité arrière de ladite partie allongée, chacune de ces roues étant articulée par rapport à cette partie allongée par l'intermédiaire d'un axe sensiblement vertical et étant orientée autour de cet axe, au moyen d'un dispositif de commande, en fonction de la direction de déplacement.

Sur une machine de ce genre connue dans le modèle d'utilité DE 9014 438, le dispositif de commande est constitué par une tringle de traction et de poussée qui est réalisée en plusieurs parties assemblées entre elles. Elle s'étend de l'organe d'accouplement jusqu'à un pivot à deux branches qui est lui-même relié aux axes d'articulation des roues à travers une barre de liaison.

Cette tringle comporte plusieurs articulations aux endroits où les différentes parties qui la constituent sont assemblées. Ces articulations prennent rapidement trop de jeu, ce qui fait perdre toute précision au dispositif de commande. Les roues porteuses de la machine ne sont alors plus commandées correctement.

En sus, ces tringles sont lourdes et encombrantes.

La demande de brevet DE 2 364 416 concerne une charrue avec un bâti qui est muni à l'avant d'un organe d'accouplement et à l'arrière d'une poutre transversale sur laquelle sont articulées deux roues porteuses. Celles-ci sont orientables au moyen de deux câbles qui sont reliés à des disques dont le premier est fixé sur l'organe d'accouplement et le second sur la poutre avec les roues porteuses, ce second disque étant relié aux axes d'articulation des roues porteuses au moyen de tringles. Les faces des disques sur lesquelles sont fixées les extrémités des câbles sont planes. Ainsi, lorsque ces disques tournent sur eux-mêmes dans les courbes ou les virages, la position des câbles par rapport au centre de chaque disque varie. De ce fait, les déplacements de ces câbles ne sont pas directement proportionnels à ceux de l'organe d'accouplement. De plus, les angles de braquage sont limités.

D'autre part, en cas de rupture d'un des câbles, la partie arrière de la charrue peut se déplacer latéralement d'une manière incontrôlée. Si cela se produit durant le transport, ladite partie arrière peut provoquer de graves accidents.

La présente invention a notamment pour but de supprimer les inconvénients des machines connues. A cet effet, d'importantes caractéristiques consistent en ce que le dispositif de commande se compose de deux câbles ayant chacun une extrémité fixée sur un premier pivot qui est solidaire de l'organe d'accouplement, et qui comporte un guide concentrique à l'axe d'articulation dudit organe d'accouplement et du pivot, lesdits câbles étant en contact avec ce guide sur des secteurs d'au moins 90° lorsque la machine est dans la position pour être déplacée en ligne droite et ayant chacun une autre extrémité qui est fixée sur un second pivot articulé par rapport à la partie allongée du châssis, au moyen d'un axe sensiblement vertical, lequel axe est relié aux axes d'articulation des roues porteuses par des tringles, ledit second pivot comportant un guide concentrique à son axe d'articulation, lesdits câbles étant également en contact avec ce guide sur des secteurs d'au moins 90° et se situant l'un à droite et l'autre à gauche des axes d'articulation et en ce qu'elle comporte un mécanisme de blocage des axes d'articulation des roues porteuses en cas de rupture d'un câble.

Les câbles de commande selon l'invention ne comportent pas d'articulations qui peuvent prendre du jeu. La commande des roues porteuses est donc toujours précise.

De plus, ces câbles sont moins lourds que les tringles connues et ils peuvent suivre assez fidèlement la partie allongée du châssis.

Par ailleurs, grâce aux guides prévus sur les pivots, la distance des câbles par rapport au centre de chaque pivot reste constante. Dans les courbes et les virages les déplacements des câbles sont directement proportionnels à ceux de l'organe d'accouplement. En sus, les angles de braquage peuvent être importants.

Enfin, le mécanisme de blocage des axes d'articulation des roues porteuses du châssis empêche la machine de se déporter latéralement d'une manière incontrôlée en cas de rupture d'un des câbles.

D'autres caractéristiques et avantages de l'invention ressortiront des autres revendications et de la description ci-après d'un exemple de réalisation non limitatif de l'invention, avec référence aux dessins annexés dans lesquels :
- la figure 1 représente une vue de dessus d'une machine selon l'invention.
- La figure 2 représente une vue de côté de la machine.
- La figure 3 représente, en coupe partielle et à plus grande échelle, la partie arrière de la machine.
- La figure 4 représente, en coupe partielle et à plus grande échelle, une vue de dessus de la partie arrière de la machine.
- La figure 5 représente, à plus grande échelle, une vue de dessus de la partie avant de la machine.
- La figure 6 représente une vue de côté de la même partie avant de la machine.
- La figure 7 représente, à plus grande échelle et en coupe partielle, une vue de dessus d'un exemple de réalisation d'un mécanisme de blocage.
- La figure 8 représente une coupe suivant le plan 8-8 de la figure 7.

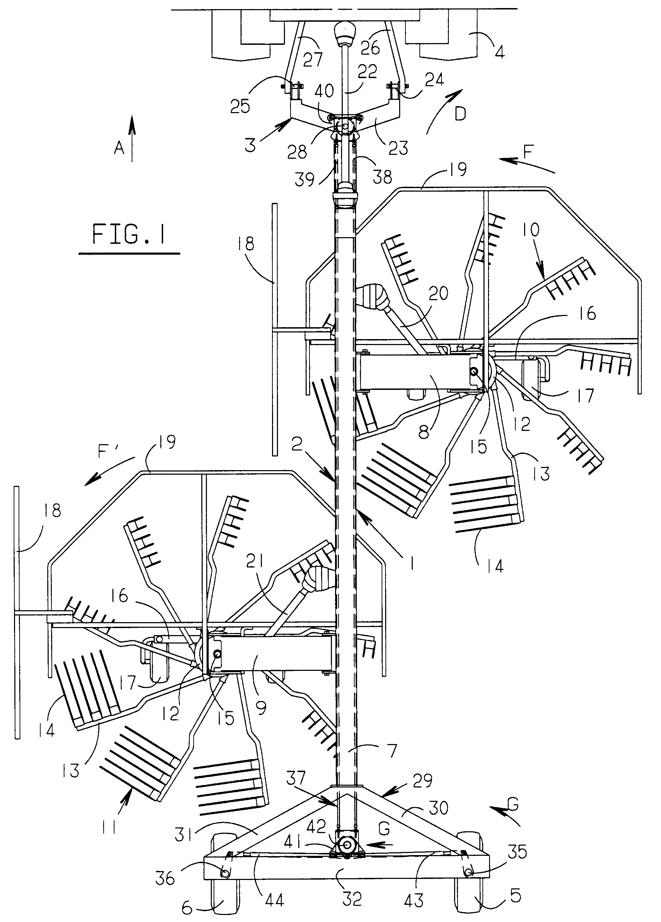

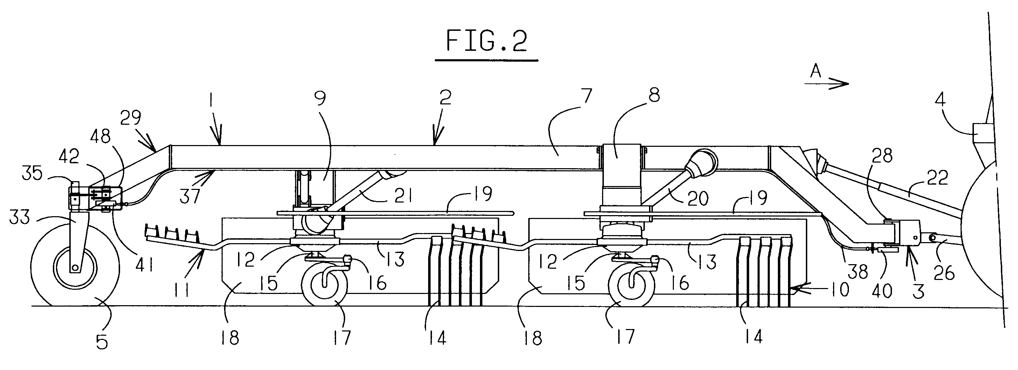

Telle qu'elle est représentée sur les figures 1 et 2, la machine selon l'invention comporte un châssis (1) qui se compose notamment d'une partie allongée (2), d'un organe d'accouplement (3) à un tracteur (4) et de deux roues porteuses (5 et 6). La partie allongée (2) est constituée par une poutre (7) dont l'extrémité avant est dirigée obliquement vers le bas. Sur cette poutre (7) sont articulés deux bras (8 et 9) portant chacun un rotor d'andainage (10, 11). L'un (8) de ces bras se situe à droite et l'autre (9) à gauche de la poutre (7). Vus dans la direction d'avancement (A), ils sont décalés l'un par rapport à l'autre.

Chacun des rotors (10 et 11) se compose d'un boîtier central (12) portant plusieurs bras (13) équipés de fourches (14) près de leurs extrémités. Ledit boîtier (12) est monté de manière à pouvoir être entraîné en rotation sur un axe support (15). Celui-ci est sensiblement vertical lorsque la machine est en position de travail. Son extrémité inférieure est munie d'une traverse (16) avec deux roulettes (17) qui se déplacent sur le sol durant le travail. Dans ledit boîtier (12) est prévue une came fixe pour commander les bras porte-outils (13). Chacun de ceux-ci peut pivoter autour de son axe longitudinal et possède un galet qui se situe dans ladite came.

Chaque rotor (10, 11) peut posséder un déflecteur latéral (18) qui limite la projection du fourrage. Il peut également être prévu, sur la moitié avant de chaque rotor (10, 11), un cadre de protection (19).

Les bras (8 et 9) qui portent les rotors (10 et 11) peuvent avantageusement être télescopiques. Lesdits rotors (10 et 11) peuvent ainsi occuper une position dans laquelle les bras porte-outils (13) du rotor (11) le plus en arrière se situent partiellement derrière ceux du rotor (10) le plus en avant (figure 1) ou bien une position dans laquelle les deux rotors (10 et 11) sont plus éloignés l'un de l'autre, de sorte qu'il existe un intervalle entre les trajectoires de leurs bras porte-outils (13) respectifs.

Sur la machine sont prévus des moyens de transmission pour l'entraînement en rotation des rotors (10 et 11) à partir d'un tracteur (4). Ces moyens sont constitués par des arbres de transmission et des carters de renvoi logés dans la poutre (7), de deux arbres à cardans (20 et 21) qui assurent la liaison entre lesdits carters de renvoi et les rotors (10 et 11) et un troisième arbre à cardan (22) qui est raccordé à l'arbre de prise de force du tracteur.

L'organe d'accouplement (3) est constitué par un cintre horizontal (23) muni de deux tourillons (24 et 25) pour l'accouplement aux bielles inférieures (26 et 27) du dispositif de relevage hydraulique du tracteur (4). Ce cintre (23) est articulé en son milieu sur la poutre (7) au moyen d'un axe (28) sensiblement vertical. Cet axe (28) est solidaire du cintre (23) et est logé de manière à pouvoir tourner sur lui-même, dans une bague prévue sur la poutre (7).

A l'extrémité arrière de la poutre (7) est fixé un cadre (29) de forme triangulaire, constitué par deux poutres divergentes (30 et 31) et une traverse (32). Les deux roues porteuses (5 et 6) sont reliées à ce cadre (29). Chacune de ces roues (5 et 6) est montée sur un support (33, 34) qui est articulé sur ledit cadre (29) au moyen d'un axe sensiblement vertical (35, 36). Entre ces deux roues (5 et 6) et l'organe d'accouplement (3) est prévu un dispositif de commande (37) qui oriente lesdites roues (5 et 6) en fonction de la direction de déplacement du tracteur (4) et de la machine. Ce dispositif de commande (37) comprend deux câbles (38 et 39). Une des extrémités de chacun de ces câbles (38 et 39) est fixée sur un premier pivot (40) au moyen d'une broche (46 et 47). Ce premier pivot (40) est lui-même fixé à l'extrémité inférieure de l'axe d'articulation (28) solidaire de l'organe d'accouplement (3). Lesdits câbles (38 et 39) se situent l'un à droite et l'autre à gauche de l'axe d'articulation (28). Ils ont chacun une deuxième extrémité qui est fixée sur un second pivot (41) au moyen d'une broche (56, 57). Ce second pivot est articulé par rapport à la partie allongée (2) du châssis (1) au moyen d'un axe (42) sensiblement vertical. Ce dernier est relié aux axes d'articulation (35 et 36) des roues porteuses (5 et 6) par des tringles (43 et 44). Les câbles (38 et 39) se situent l'un à droite et l'autre à gauche de l'axe d'articulation (42) du second pivot (41).

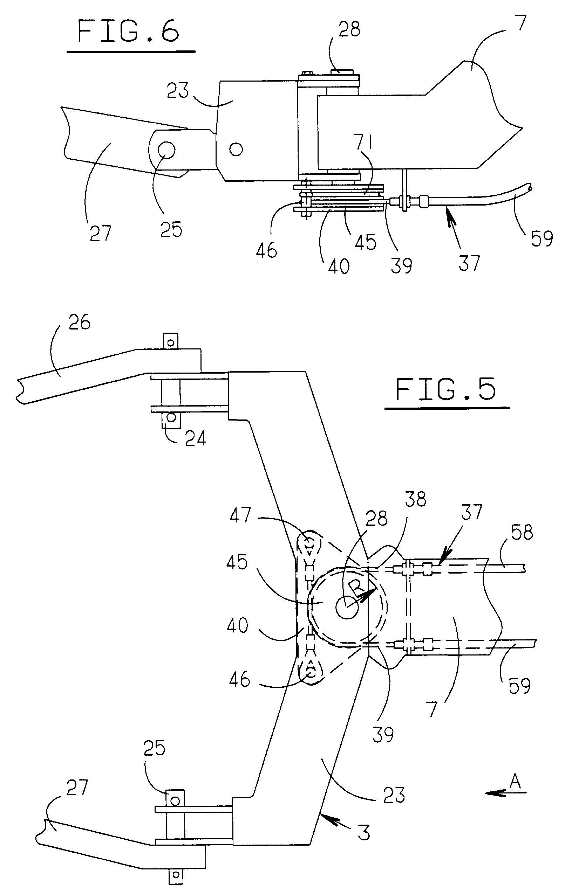

Le premier pivot (40) comporte un guide (45) qui est concentrique à l'axe d'articulation (28). Ce guide (45) possède deux gorges (71) pour les câbles (38 et 39). Considéré dans la direction de déplacement (A), le câble (38) passe sur le côté droit de ce guide (45), tandis que l'autre câble (39) passe sur son côté gauche (voir figures 5 et 6).

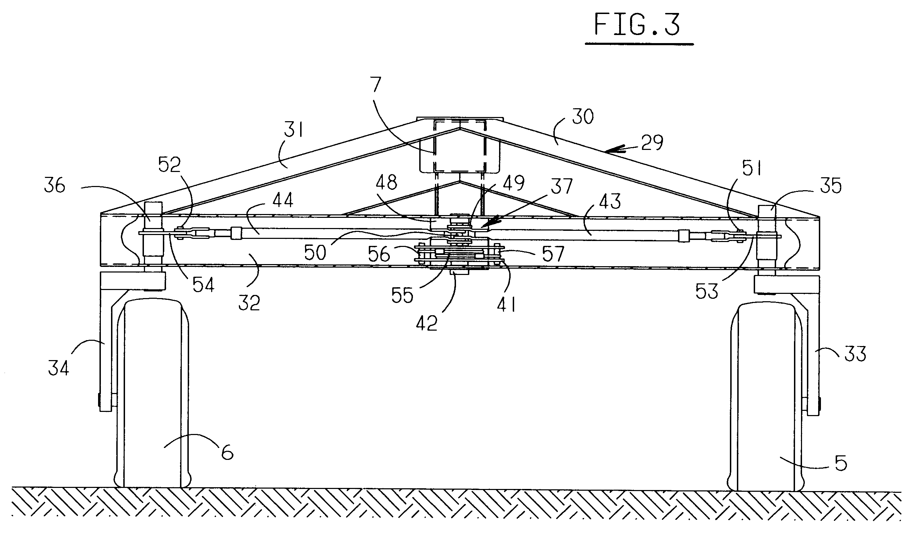

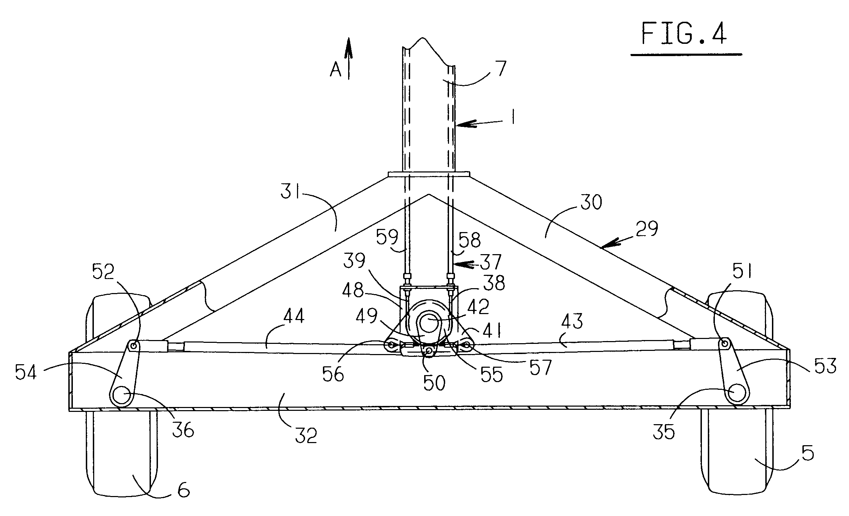

Le second pivot (41) se situe entre les deux roues porteuses (5 et 6) du châssis (1). Il est articulé au moyen de son axe (42) sur un support coudé (48) qui est solidaire de la traverse (32) dudit châssis (1). Au-dessus de ce second pivot (41), cet axe d'articulation (42) comporte un levier (49) qui est dirigé vers l'arrière et qui porte un tourillon (50). Sur ce tourillon (50) sont articulées les deux tringles (43 et 44). Chacune de celles-ci est accrochée, avec son autre extrémité, sur un tourillon (51, 52) d'un levier (53, 54). Chacun de ces leviers (53 et 54) est fixé à l'extrémité supérieure de l'axe d'articulation (35, 36) d'une des roues porteuses (5 et 6) du châssis (1) et est dirigé vers l'avant. Le second pivot (41) comporte également un guide (55) qui est concentrique à l'axe d'articulation (42). Ce guide (55) possède deux gorges (72) pour les câbles (38 et 39). Vu de l'arrière et dans la direction de déplacement (A), le câble (38) passe sur le côté droit de ce guide (55) et est fixé sur le second pivot (41) à l'aide de la broche (56). L'autre câble (39) passe sur le côté gauche dudit guide (55) et est fixé sur ledit pivot (41) avec la broche (57) (voir figures 3, 4, 7 et 8).

Dans le mode de réalisation représenté sur la figure 1, le câble (38) passe sur le côté droit des deux guides (45 et 55), tandis que le deuxième câble (39) passe sur le côté gauche de ces deux guides (45 et 55). Les gorges (71 et 72) pour les câbles (38 et 39) qui sont prévues dans ces guides (45 et 55) ont des rayons identiques.

La distance entre les broches de fixation (46 et 47) des deux câbles (38 et 39) sur le premier pivot (40) par rapport à l'axe d'articulation (28) de ce dernier est sensiblement égale à la distance de leurs broches de fixation (56 et 57) sur le second pivot (41) par rapport à l'axe d'articulation (42) de ce dernier.

Par ailleurs, les deux câbles (38 et 39) sont en contact avec les deux guides (45 et 55) sur des secteurs d'au moins 90° lorsque la machine est dans la position pour être déplacée en ligne droite. Cette caractéristique permet de maintenir le contact entre les câbles (38 et 39) et les deux guides (45 et 55) même dans les virages. Par conséquent, ces deux câbles (38 et 39) sont constamment tendus et assurent continuellement la commande des roues (5 et 6).

Chaque câble (38 et 39) est logé dans une gaine (58, 59). Ces deux gaines (58 et 59) assurent une protection des câbles (38 et 39) et permettent de les guider de l'avant vers l'arrière de la machine, le long de la partie allongée (2) du châssis (1).

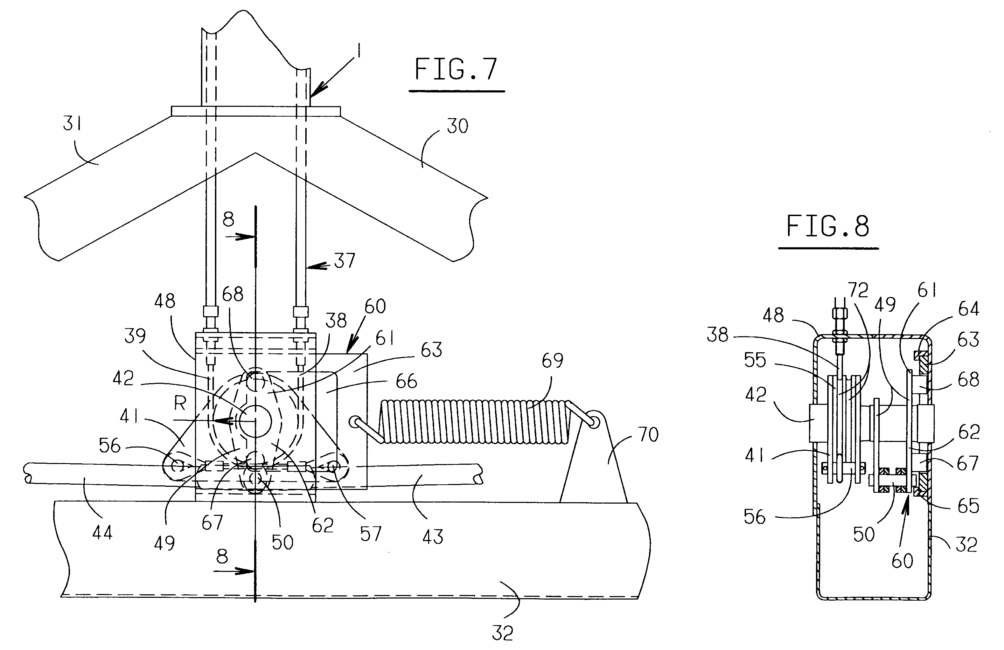

Comme il ressort des figures 7 et 8, le mécanisme de blocage (60) des axes d'articulation (35 et 36) des roues porteuses (5 et 6) se situe entre lesdites roues, au niveau du levier (49) auquel sont liées les tringles (43 et 44). Ce levier (49) présente deux branches (61 et 62) qui s'étendent de part et d'autre de l'axe d'articulation (42) et dont l'une est dirigée vers l'avant et l'autre vers l'arrière. Le mécanisme (60) comprend une butée (63) rectangulaire qui coulisse dans deux guides (64 et 65) prévus sur le support coudé (48). Cette butée (63) comporte une découpe (66) de forme pratiquement carrée. Dans cette découpe (66) se situent deux galets (67 et 68) qui sont fixés sur le levier (49). Chacun de ces galets (67 et 68) est lié à une des branches (61 et 62) du levier (49), de sorte qu'ils se situent sur des côtés opposés, pratiquement à égales distances, par rapport à l'axe d'articulation (42).

Un ressort de traction (69) est accroché à la butée (63) par l'une de ses extrémités. Son autre extrémité est accrochée à une patte (70) de la traverse (32) du châssis (1). Ce ressort (69) exerce une traction latérale sur la butée (63) de sorte qu'elle s'appuie constamment contre au moins un des galets (67 et 68). La force de traction de ce ressort (69) est inférieure à la force de traction des câbles (38 et 39) lorsqu'ils sont actionnés.

Au travail, l'organe d'accouplement (3) est accroché aux bielles inférieures (26 et 27) du tracteur (4) servant à animer et à déplacer la machine dans la direction (A). Les bras (8 et 9) sont abaissés, de sorte que les roulettes (17) des deux rotors (10 et 11) se déplacent sur le sol. Ces rotors (10 et 11) sont entraînés en rotation autour de leurs axes supports (15), de sorte qu'ils tournent dans le même sens (flèches F et F'). Les bras porte-outils (13) de chaque rotor (10 et 11) sont alors commandés par la came du boîtier (12), de telle sorte que leurs fourches (14) ratissent sur la partie avant de leur trajectoire, les végétaux se trouvant au sol et les déposent latéralement sous la forme d'un andain. Dans la position représentée sur la figure 1, l'andain déposé par le rotor (10) le plus en avant est intégralement repris par le second rotor (11) qui forme alors un seul andain de plus gros volume.

Durant tous les déplacements de la machine, l'organe d'accouplement (3) est lié au tracteur. Dans les virages, il tourne avec le tracteur et pivote par rapport à la poutre (7) au moyen de son axe d'articulation (28). Le premier pivot (40) qui est solidaire de cet axe d'articulation (28) tire alors sur l'un des câbles (38 ou 39) tout en relâchant l'autre desdits câbles. De ce fait, le câble (38 ou 39) qui est tendu fait tourner le second pivot (41) avec son axe d'articulation (42) dans la même direction et du même angle que le premier pivot (40). Ledit axe (42) actionne alors les tringles (43 et 44) par l'intermédiaire du levier (49). Celles-ci font pivoter les roues porteuses (5 et 6) au moyen des leviers (53 et 54), des axes d'articulation (35 et 36) et des supports (33 et 34) dans la direction opposée à la direction de pivotement de l'organe d'accouplement (3). Ainsi, lorsque le tracteur (4) et l'organe d'accouplement (3) tournent vers la droite (direction indiquée par la flèche D), le premier pivot (40) tire sur le câble (39). Celui-ci fait tourner le second pivot (41) et son axe (42), de telle sorte que le levier (49) déplace les tringles (43 et 44) vers la gauche (direction indiquée par la flèche G). Ces tringles (43 et 44) orientent alors les roues porteuses (5 et 6) dans cette même direction (G), c'est-à-dire dans la direction opposée à celle prise par le tracteur (4). L'angle de pivotement des roues porteuses (5 et 6) est alors sensiblement égal à celui de l'organe d'accouplement (3) par rapport à la partie allongée (2) du châssis (1). La partie arrière de la machine suit alors nettement mieux la voie empruntée par le tracteur.

Inversement, lorsque le tracteur (4) tourne vers la gauche, l'autre câble (38) tire sur le second pivot (41), de telle sorte que les tringles (43 et 44) soient déplacées vers la droite. Les roues porteuses (5 et 6) pivotent alors vers la droite pour mieux suivre la voie empruntée par le tracteur.

Au transport, les deux bras (8 et 9) et les rotors (10 et 11) sont relevés dans des positions sensiblement verticales, afin de réduire la largeur de la machine. Dans cette position, le dispositif de commande (37) des roues porteuses (5 et 6) fonctionne de la même manière que dans la position de travail, en vue de faciliter les déplacements sur les routes et les chemins.

Sur la machine équipée du mécanisme de blocage (60), le levier (49) à double branches (61 et 62) déplace automatiquement, à l'aide des galets (67 et 68), la butée (63) à l'encontre de la force du ressort (69), dès que le deuxième pivot (41) est actionné par l'un des câbles (38, 39). Cette butée (63) coulisse latéralement et n'entrave pas le fonctionnement normal du dispositif de commande (37). Toutefois, si l'un quelconque des câbles (38, 39) venait à se rompre, ladite butée (63) empêcherait le levier (49) à double branches (61 et 62) de tourner librement. Ceci est dû au fait qu'elle est plaquée contre les galets (67 et 68) par le ressort (69). Elle maintient ainsi ledit levier (49) et les tringles (43 et 44) dans une position médiane, de manière à ce que les roues porteuses (5 et 6) soient dirigées dans la direction d'avancement (A). On évite ainsi que la machine se déporte latéralement par rapport au tracteur, ce qui serait particulièrement dangereux durant le transport ou durant le travail sur un terrain en pente.

Il est bien évident que l'invention n'est pas limitée aux modes de réalisation décrits et représentés sur les dessins annexés. Des modifications sont possibles, notamment en ce qui concerne la constitution des divers éléments ou par substitution d'équivalents techniques, sans pour autant sortir du domaine de protection tel que défini dans les revendications.

## Revendications

1. Machine de fenaison comportant un châssis (1) portant un ou plusieurs rotors (10,11) à axes dirigés vers le haut, lequel châssis (1) se compose d'une partie allongée (2) à laquelle sont reliés lesdits rotors (10, 11) par l'intermédiaire de bras (8, 9), d'un organe d'accouplement (3) à un tracteur, cet organe (3) étant articulé à l'extrémité avant de la partie allongée (2) au moyen d'un axe (28) sensiblement vertical et de roues porteuses (5, 6) qui sont reliées à l'extrémité arrière de ladite partie allongée (2), chacune de ces roues (5, 6) étant articulée par rapport à cette partie allongée (2) par l'intermédiaire d'un axe sensiblement vertical (35, 36) et étant orientée autour de cet axe au moyen d'un dispositif de commande (37), en fonction de la direction de déplacement, caractérisée par le fait que ledit dispositif de commande (37) se compose de deux câbles (38 et 39) ayant chacun une extrémité fixée sur un premier pivot (40) qui est solidaire de l'organe d'accouplement (3) et qui comporte un guide (45) concentrique à l'axe d'articulation (28) dudit organe d'accouplement (3) et du pivot (40), lesdits câbles (38 et 39) étant en contact avec ce guide (45) sur des secteurs d'au moins 90°, lorsque la machine est dans la position pour être déplacée en ligne droite et ayant chacun une autre extrémité qui est fixée sur un second pivot (41) articulé par rapport à la partie allongée (2) du châssis (1) au moyen d'un axe sensiblement vertical (42), lequel axe (42) est relié aux axes d'articulation (35 et 36) des roues porteuses (5 et 6) par des tringles (43 et 44), ledit second pivot (41) comportant un guide (55) concentrique à son axe d'articulation (42), lesdits câbles (38 et 39) étant également en contact avec ce guide (55) sur des secteurs d'au moins 90° et se situant l'un à droite et l'autre à gauche des axes d'articulation (28, 42) et par le fait qu'elle comporte un mécanisme de blocage (60) des axes d'articulation (35 et 36) des roues porteuses (5, 6) en cas de rupture d'un câble (38 ou 39).

2. Machine de fenaison selon la revendication 1, caractérisée par le fait que chaque guide (45 et 55) comporte deux gorges (71 et 72) pour les câbles (38 et 39) et que les gorges (71 et 72) qui sont prévues dans les deux guides (45 et 55) ont des rayons identiques.

3. Machine de fenaison selon la revendication 1, caractérisée par le fait que la distance entre les points de fixation (46 et 47) des câbles (38 et 39) sur le premier pivot (40) par rapport à l'axe d'articulation (28) de ce dernier est égale à la distance de leurs points de fixation (56 et 57) sur le second pivot (41) par rapport à l'axe d'articulation (42) de ce dernier.

4. Machine de fenaison selon la revendication 1 ou 2, caractérisée par le fait que le même câble (38) passe sur le côté droit des guides (45 et 55) des deux pivots (40 et 41) et que l'autre câble (39) passe sur le côté gauche de ces deux guides (45 et 55).

5. Machine de fenaison selon la revendication 1, caractérisée par le fait que l'axe d'articulation (42) du second pivot (41) comporte, pour l'accrochage des tringles (43 et 44), un levier (49) qui est dirigé vers l'arrière - vu dans la direction de déplacement (A).

6. Machine de fenaison selon la revendication 1 ou 5, caractérisée par le fait que les axes d'articulation (35 et 36) des roues porteuses (5 et 6) comportent des leviers (53 et 54) qui sont dirigés vers l'avant - vu dans la direction de déplacement (A) - pour l'accrochage des tringles (43 et 44).

7. Machine de fenaison selon la revendication 1, caractérisée par le fait que le mécanisme de blocage (60) est constitué par une butée coulissante (63), un ressort de traction (69) lié à ladite butée (63) et au châssis (1) et d'un levier (49) à deux branches (61 et 62) qui est solidaire de l'axe d'articulation (42) du second pivot (41), ce levier (49) portant d'une part un tourillon (50) pour l'accrochage des tringles (43 et 44) et, d'autre part, deux galets (67 et 68) qui coopèrent avec ladite butée (63).

8. Machine de fenaison selon la revendication 7, caractérisée par le fait que les deux galets (67 et 68) se situent sur des côtés opposés par rapport à l'axe d'articulation (42) du levier (49) et du second pivot (41).

## Claims

1. Haymaking machine comprising a frame (1) carrying one or several rotors (10, 11) with upwardly directed axes, the said frame (1) being composed of an elongated part (2) to which are connected the said rotors (10, 11) by means of arms (8, 9), of a coupling element (3) to a tractor, this element (3) being articulated at the front end of the elongated part (2) by means of an approximately upright axis (28) and of carrier wheels (5, 6) which are connected to the rear end of the said elongated part (2), each of these wheels (5, 6) being articulated with regard to this elongated part (2) by means of an approximately upright axis (35, 36) and being oriented about this axis by means of a control mechanism (37), according to the direction of displacement, ***characterised in that*** the said control mechanism (37) is made up of two cables (38 and 39) each having an end fastened to a first pivot (40) which is firmly attached to the coupling element (3) and which comprises a guide (45) concentric to the axis of articulation (28) of the said coupling element (3) and of the pivot (40), the said cables (38 and 39) being in contact which this guide (45) on sectors of at least 90°, when the machine is in the position to be displaced in a straight line and each having another end which is fastened to the second pivot (41) articulated with regard to the elongated part (2) of the flame (1) by means of an approximately upright axis (42), which axis (42) is connected to the axes of articulation (35 and 36) of the carrier wheels (5 and 6) by means of rods (43 and 44), the said second pivot (41) comprising a guide (55) concentric to its axis of articulation (42), the said cables (38 and 39) also being in contact with this guide (55) on sectors of at least 90° and being located one at the right and the other at the left of the axes of articulation (28, 42) and in that it comprises a locking mechanism (60) for the axes of articulation (35 and 36) of the carrier wheels (5, 6) in case of the breaking of a cable (38 or 39).

2. Haymaking machine in accordance with claim 1, ***characterised in that*** each guide (45 and 55) comprises two grooves (71 and 72) for the cables (38 and 39) and that the grooves (71 and 72) which are provided in the guides (45 and 55) have identical radii.

3. Haymaking machine in accordance with claim 1, ***characterised in that*** the distance between the fixing points (46 and 47) of the cables (38 and 39) on the first pivot (40) with regard to the axis of articulation (28) of this latter is equal to the distance of their fixing points(56 and 57) on the second pivot (41) with regard to the axis of articulation (42) of this latter.

4. Haymaking machine in accordance with claim 1 or 2, ***characterised in that*** the same cable (38) passes on the right side of the guides (45 and 55) of the two pivots (40 and 41) and that the other cable (39) passes on the left side of the two guides (45 and 55).

5. Haymaking machine in accordance with claim 1, ***characterised in that*** the axis of articulation (42) of the second pivot (41) comprises, for the coupling of the rods (43 and 44), a lever (49) which is directed to the rear - seen in the direction of displacement (A).

6. Haymaking machine in accordance with claim 1 or 5, ***characterised in that*** the axes of articulation (35 and 36) of the carrier wheels (5 and 6) comprise levers (53 and 54) which are directed to the front - seen in the direction of displacement (A) - for the coupling of the rods (43 and 44).

7. Haymaking machine in accordance with claim 1, ***characterised in that*** the locking mechanism (60) is composed of a sliding stop (63), a draw-spring (69) connected to the said stop (63) and to the frame (1) and a lever (49) with two legs (61 and 62) which is firmly attached to the axis of articulation (42) of the second pivot (41), this lever (49) carrying on one hand a pin (50) for the coupling of the rods (43 and 44) and, on the other hand, two rollers (67 and 68) which cooperate with the said stop (63).

8. Haymaking machine in accordance with claim 7, ***characterised in that*** the two rollers (67 and 68) are located on opposite sides with regard to the axis of articulation (42) of the lever (49) and the second pivot (41).

## Patentansprüche

1. Heuwerbungsmaschine mit einem Rahmen (1), der einen oder mehrere Rotoren (10, 11) trägt, deren Achsen nach oben ausgerichtet sind, wobei der Rahmen (1) aus folgendem besteht : einem länglichen Teil (2), an dem die Rotoren (10, 11) mit Hilfe von Armen (8, 9) befestigt sind, einem Glied (3) zur Kupplung an eine Zugmaschine, wobei dieses Glied (3) mittels einer im wesentlichen vertikalen Achse (28) an dem vorderen Ende des länglichen Teils (2) angelenkt ist, und aus Stützrädern (5, 6), die an dem hinteren Ende des länglichen Teils (2) befestigt sind, wobei jedes dieser Räder (5, 6) mit Hilfe einer im wesentlichen vertikalen Achse (35, 36) bezüglich dieses länglichen Teils (2) angelenkt ist und mittels einer Steuervorrichtung (37) abhängig von der Fortbewegungsrichtung um diese Achse ausgerichtet wird, ***dadurch gekennzeichnet***, daß die Steuervorrichtung (37) zwei Seile (38 und 39) umfaßt, die jeweils ein an einem ersten Drehzapfen (40) angebrachtes Ende aufweisen, welcher fest mit dem Kupplungsglied (3) verbunden ist und der eine zur Gelenkachse (28) des Kupplungsglieds (3) und des Drehzapfens (40) konzentrische Führung (45) enthält, wobei die Seile (38 und 39) mit dieser Führung (45) in Kreisausschnitten von mindestens 90° in Kontakt stehen, wenn sich die Maschine in der Position befindet, um in gerader Linie fortbewegt zu werden, und jeweils ein anderes Ende aufweisen, das an einem zweiten Drehzapfen (41) befestigt ist, der mittels einer im wesentlichen vertikalen Achse (42) bezüglich des länglichen Teils (2) des Rahmens (1) angelenkt ist, wobei die Achse (42) durch Stangen (43 und 44) mit den Gelenkachsen (35 und 36) der Stützräder (5 und 6) verbunden ist, wobei der zweite Drehzapfen (41) eine zu seiner Gelenkachse (42) konzentrische Führung (55) aufweist und die Seile (38 und 39) ebenfalls mit dieser Führung (55) in Kreisausschnitten von mindestens 90° in Kontakt stehen und sich jeweils rechts bzw. links der Gelenkachsen (28, 42) befinden, und dadurch, daß sie einen Mechanismus (60) zum Sperren der Gelenkachsen (35 und 36) der Stützräder (5, 6) bei einem Reißen eines Seils (38 oder 39) enthält.

2. Heuwerbungsmaschine nach Anspruch 1, ***dadurch gekennzeichnet***, daß jede Führung (45 und 55) zwei Rillen (71 und 72) für die Seile (38 und 39) enthält und daß die in den beiden Führungen (45 und 55) vorgesehenen Rillen (71 und 72) den gleichen Radius haben.

3. Heuwerbungsmaschine nach Anspruch 1, ***dadurch gekennzeichnet***, daß der Abstand zwischen den Befestigungsstellen (46 und 47) der Seile (38 und 39) an dem ersten Drehzapfen (40) bezüglich der Gelenkachse (28) des letzteren gleich dem Abstand ihrer Befestigungsstellen (56 und 57) an dem zweiten Drehzapfen (41) bezüglich der Gelenkachse (42) des letzteren ist.

4. Heuwerbungsmaschine nach Anspruch 1 oder 2, ***dadurch gekennzeichnet***, daß das gleiche Seil (38) auf der rechten Seite der Führungen (45 und 55) der beiden Drehzapfen (40 und 41) verläuft und daß das andere Seil (39) auf der linken Seite dieser beiden Führungen (45 und 55) verläuft.

5. Heuwerbungsmaschine nach Anspruch 1, ***dadurch gekennzeichnet***, daß die Gelenkachse (42) des zweiten Drehzapfens (41) für das Anhängen der Stangen (43 und 44) einen Hebel (49) enthält, der - in Fortbewegungsrichtung (A) gesehen - nach hinten ausgerichtet ist.

6. Heuwerbungsmaschine nach Anspruch 1 oder 5, ***dadurch gekennzeichnet***, daß die Gelenkachsen (35 und 36) der Stützräder (5 und 6) Hebel (53 und 54) zum Anhängen der Stangen (43 und 44) enthalten, die - in Fortbewegungsrichtung (A) gesehen - nach vorne ausgerichtet sind.

7. Heuwerbungsmaschine nach Anspruch 1, ***dadurch gekennzeichnet***, daß der Sperrmechanismus (60) aus folgendem besteht: einem gleitenden Anschlag (63), einer Zugfeder (69), die mit dem Anschlag (63) und dem Rahmen (1) verbunden ist, und einem Hebel (49) mit zwei Schenkein (61 und 62), der fest mit der Gelenkachse (42) des zweiten Drehzapfens (41) verbunden ist, wobei dieser Hebel (49) einerseits einen Zapfen (50) zum Anhängen der Stangen (43 und 44) und andererseits zwei Rollen (67 und 68), die mit dem Anschlag (63) zusammenwirken, trägt.

8. Heuwerbungsmaschine nach Anspruch 7, ***dadurch gekennzeichnet***, daß sich die beiden Rollen (67 und 68) auf gegenüberliegenden Seiten bezüglich der Gelenkachse (42) des Hebels (49) und des zweiten Drehzapfens (41) befinden.
